# EUROPEAN PATENT APPLICATION

(11) **EP 2 128 650 A1**
(43) Date of publication of application: **02.12.2009**
(21) Application number: 08710556.5
(22) Date of filing: 18.01.2008
(51) Int. Cl.: G01T 1/06, G01T 1/00, G01T 7/00

(54) **DOSIMETER HOUSING**

(30) Priority: 23.01.2007 JP 2007013078
(71) Applicant: Seiko Precision Inc., Chiba 275-8558 (JP); Chiyoda Technol Corporation, Bunkyo-ku Tokyo 113-8681 (JP)
(72) Inventor: TANAKA, Hideki, Narashino-shi Chiba 275-8558 (JP); MADA, Kazuyuki, Tochigi 328-0111 (JP); KAWAI, Megumi, Tochigi 328-0111 (JP); HIRANO, Yasuhiro, Tokyo 113-8681 (JP); JUTO, Norimichi, Higashi-ibaraki-gun Ibaraki 311-1313 (JP)
(74) Representative: Intes, Didier Gérard André
(86) International application number: PCT/JP2008/050566
(87) International publication number: WO 2008/090808

(57) **Abstract**

A dosimeter housing includes: an upper case 10 and a lower case 20, housing a glass element 1 for measuring a radiation dose; and an upper filter 30 and a lower filter 40 provided in the upper case 10 and the lower case 20, and arranged to sandwich the glass element 1. The upper filter 30 is provided with a restriction portion for restricting the two filters from coming closer to each other. With such a configuration, the upper filter 30 and the lower filter 40 are restricted from coming closer to each other. Consequently, even when the upper filter 30 and the lower filter 40 are pushed toward each other by the external impact or the like, the glass element 1 can be prevented from being broken by pushing the upper filter 30 and the lower filter 40 to the glass element 1.

## Description

### Technical Field

The present invention relates to a dosimeter housing which houses a glass element for measuring radiation dose.

### Background Art

Conventionally, a glass element which is made of a phosphate glass containing silver ions is used for measurement of radiation dose. This glass element generates fluorescence when excited by ultraviolet rays. The radiation dose can be measured by detecting the amount of fluorescence.

Patent Document 1 discloses a glass dosimeter which houses such a glass element within a holder and which can be carried by a user. The radiation dose of user can be measured by the user carrying the glass dosimeter.

In addition, such a glass dosimeter has a metallic filter separating the radiation qualities.
Patent Document 1: Japanese examined utility model application publication No. 2583765

### Disclosure of the Invention

### Problem to be Solved by the Invention

However, in a case where the metallic filter is provided, an external impact is transmitted to the glass element via the metallic filter, so that the glass element may be broken.

It is therefore an object of the present invention to provide a dosimeter housing having a good impact resistance.

### Means For Solving the Problems

The above object can be achieved by a dosimeter housing including: a case member housing a glass element for measuring a radiation dose; and a filter provided in the case member, wherein the filter includes two filters arranged to sandwich the glass element, and at least one of the two filters is provided with a restriction portion for restricting the two filters from coming closer to each other. With such a configuration, the filters are restricted from coming closer to each other. Consequently, even if the two filters are pushed toward each other by the external impact or the like, the glass element can be prevented from being broken by pushing the filters to the glass element. This improves the impact resistance.

In the above configuration, the restriction portion may be provided in one of the two filters, be bent toward the other filter to cover the glass element, and be a portion coming into contact with the other filter when the two filters come closer to each other.

With such a configuration, because the restriction portion is provided in one of the two filters, the increasing number of the parts is prevented.

Further, one of the two filters is bent toward the other filter so as to cover the glass element. This results in the separation accuracy of the radiation to be maintained.

In the above configuration, a cushioning member may be arranged between the filter and the glass element.

Since the filter is arranged to sandwich the glass element via the cushioning member, an impact can be prevented from transmitting to the glass element via the filter. This improves the impact resistance.

In the above configuration, the filter may be a metallic filter.

The metallic filter further improves the impact resistance.

### Effect of the Invention

According to an aspect of the present invention, it is possible to provide a dosimeter housing having a good impact resistance.

### Brief Description of the Drawings

Fig. 1 is an exploded perspective view of a dosimeter housing;
Fig. 2 is an exploded perspective view of an upper case;
Fig. 3 is an exploded perspective view of a lower case;
Fig. 4 is a view of the dosimeter housing after assembled when viewed from the top;
Fig. 5 is a cross-sectional view taken along A-A line of Fig. 4;
Fig. 6 is a cross-sectional view taken along B-B line of Fig. 4;
Fig. 7 is a cross-sectional view taken along C-C line of Fig. 4;
Fig. 8 is a cross-sectional view taken along D-D line of Fig. 4;
Figs. 9A and 9B are explanatory views of the opening of the upper case and the lower case;
Fig. 10 is an explanatory view of the state in which the upper case and the lower case are pushed in such a direction as to be crushed by the impact or the like;
Fig. 11 is an enlarged view of the contact state of the glass element and the upper cushioning member;
Fig. 12 is an exploded perspective view of the dosimeter housing according to the second embodiment of the present invention;
Fig. 13 is an exploded perspective view of the dosimeter housing according to the second embodiment of the present invention; and
Figs. 14A and 14B are cross-sectional views of the dosimeter housing according to the second embodiment of the present invention.

### Best Mode for Carrying Out the Invention

Hereinafter, preferred embodiments of the present invention will be concretely described with referent to the drawings.

### (First Embodiment)

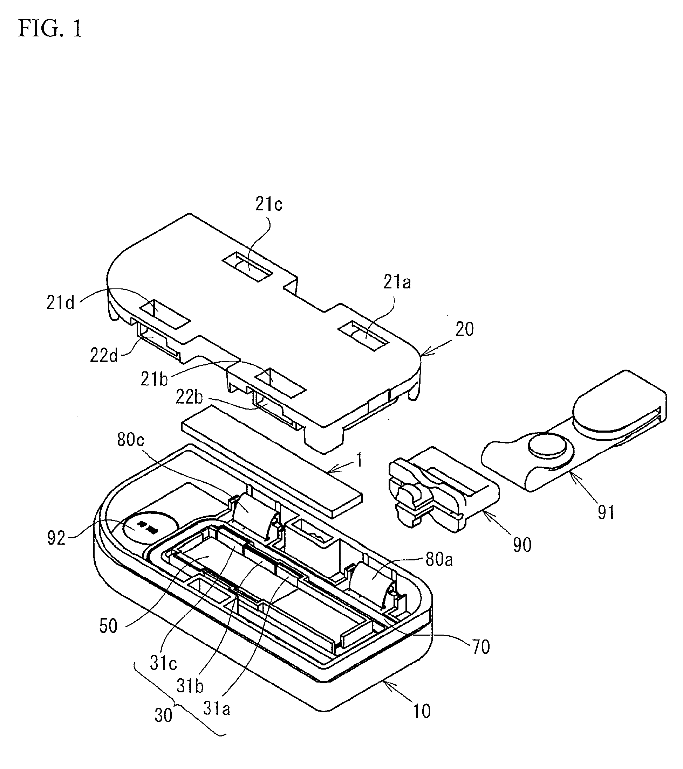

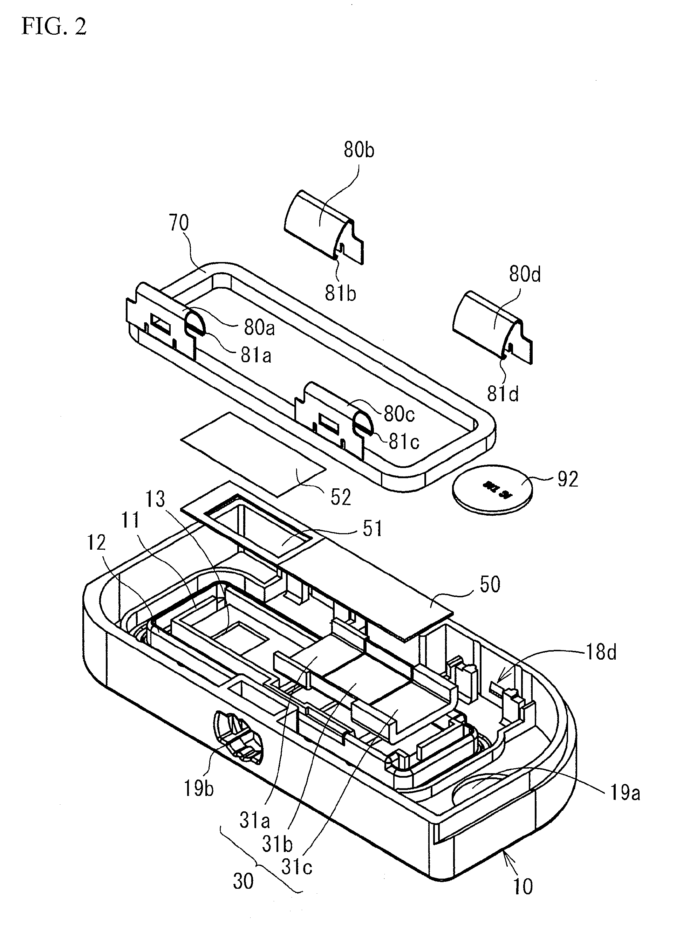

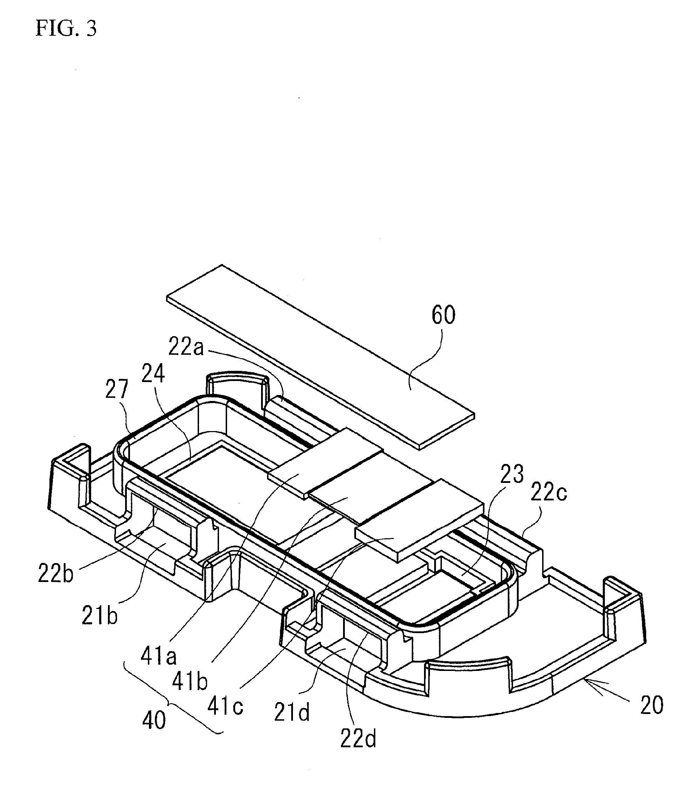

Fig. 1 is an exploded perspective view of a dosimeter housing. Fig. 2 is an exploded perspective view of an upper case. Fig. 3 is an exploded perspective view of a lower case.

The dosimeter housing includes: the upper case 10 and a lower case 20 serving as case members; an upper metallic filter 30; a lower metallic filter 40; an upper cushioning member 50; a lower cushioning member 60; a waterproof member 70; and a clip head 90. This dosimeter housing replaceably houses a glass element 1 serving as a radiation exposure measuring element.

As illustrated in Figs. 1 and 2, the upper case 10 houses: the upper metallic filter 30 that separates the radiation qualities; the upper cushioning member 50 that protects the glass element 1 from the external impact; the waterproof member 70 that is arranged to surround the glass element 1; elastic bodies 80a to 80d that serve as opening prevention means being attached to the upper case 10 and urging the lower case 20 toward the upper case 10, or the like.

Additionally, the upper case 10 has an engagement portion 19b engaging with the clip head 90 for carrying the dosimeter housing to be portable. Further, a belt clip 91 is attached to the clip head 90.

As illustrated in Fig. 2, a wall portion 11 is provided within the upper case 10, and the wall portion 11, which houses the glass element 1, the upper metallic filter 30, and upper cushioning member 50, surrounds the glass element 1. A wall portion 12 surrounds the wall portion 11 by a given gap. The waterproof member 70 made of an elastic member is housed along the periphery of the wall portion 12 provided around the glass element 1.

In addition, a measuring opening 13 is provided at a part of a portion surrounded by the wall portion 11.

The upper metallic filter 30 includes an AI filter 31a, a Cu filter 31b, and a Sn filter 31c which are different from one another in material and thickness. The upper metallic filter 30 has both ends bent toward the lower case 20.

In the upper cushioning member 50, an opening portion 51 is provided at the measuring opening 13 side. A polyimide film 52 is arranged to cover the opening portion 51. This is because the glass element 1 is prevented from being exposed via the measuring opening 13 and the opening portion 51.

The waterproof member 70 is made of a polyolefin foam. The waterproof member 70 also has an elasticity.

An IC tag 92 stores information relating to a user or the like. Further, a housing portion 19a which houses the IC tag 92 is formed in the upper case 10.

The elastic bodies 80a to 80d serving as opening prevention means are attached to the upper case 10 by an attaching structure formed at positions in which the glass element 1 is sandwiched by the inner wall of the upper case 10. In addition, the elastic bodies 80a to 80d respectively engage with engagement portions 22a to 22d mentioned later, provided in the lower case 20. The elastic bodies 80a to 80d respectively have engagement ends 81a to 81d elastically engaging the upper case 10 with the lower case 20. Additionally, each of the elastic bodies 80a to 80d is a leaf spring, made of a stainless steel, and is bent. Further, an attaching structure 18d for attaching the elastic body 80d is illustrated in Fig. 2.

As illustrated in Fig. 3, the lower case 20 includes: a wall portion 27 holding the glass element 1, the lower metallic filter 40, and the waterproof member 70; a wall portion 23 houses the lower metallic filter 40; a small step 24 positioning the lower cushioning member 60.

As illustrated in Figs. 1 and 3, jig insertion openings 21a to 21d and the engagement portions 22a to 22d are formed at the outside of the wall portion 27 in the lower case 20. The jig insertion openings 21a to 21d and the engagement portions 22a to 22d positionally correspond to the elastic bodies 80a to 80d, respectively. The jig insertion openings 21a to 21d, as will be described in detail, are provided for being inserted with an opening jig.

The lower metallic filter 40 includes an AI filter 41a, a Cu filter 41b, and a Sn filter 41c which are different from one another in material and thickness, as with the upper metallic filter 30. The lower metallic filter 40 has a plate shape different from the shape of the upper metallic filter 30.

Further, the AI filter 41a, the Cu filter 41b, and the Sn filter 41c positionally correspond to the AI filter 31a, the Cu filter 31b, and the Sn filter 31c, respectively.

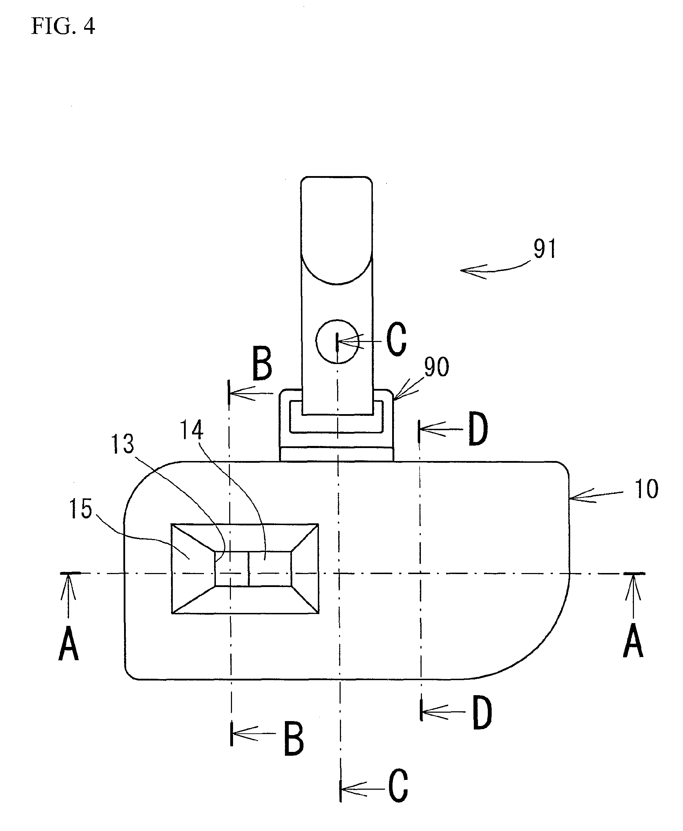

Fig. 4 is a view of the dosimeter housing after assembled when viewed from the top.

A thin portion 14 is adjacent to the measuring opening 13. An incline surface 15 surrounds the measuring opening 13 and the thin portion 14.

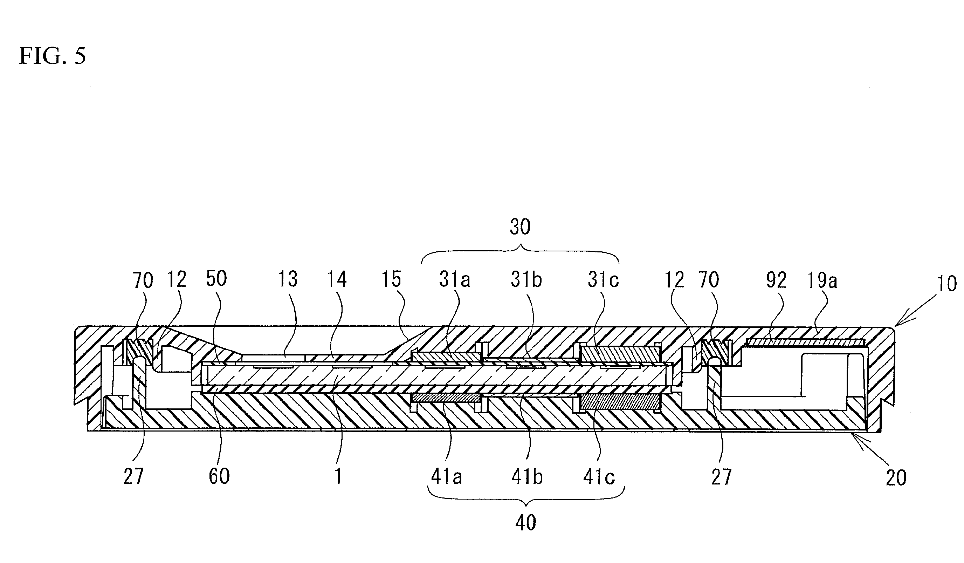

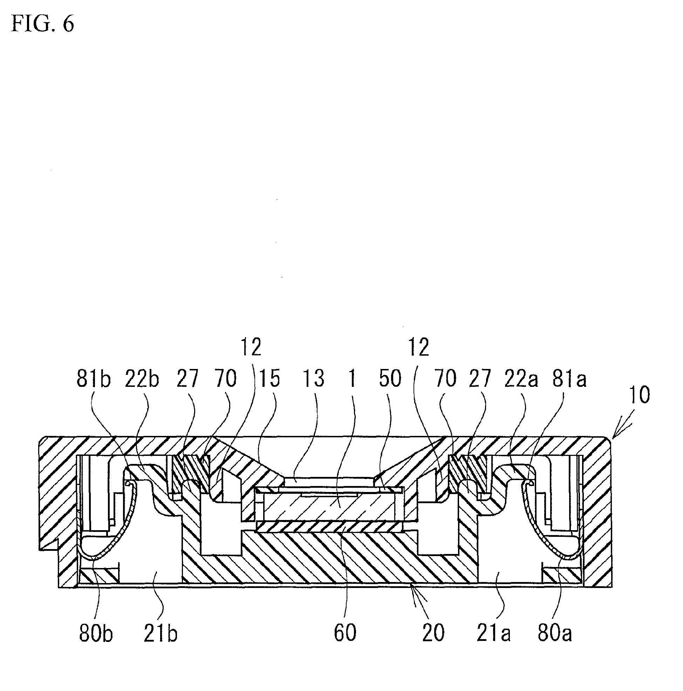

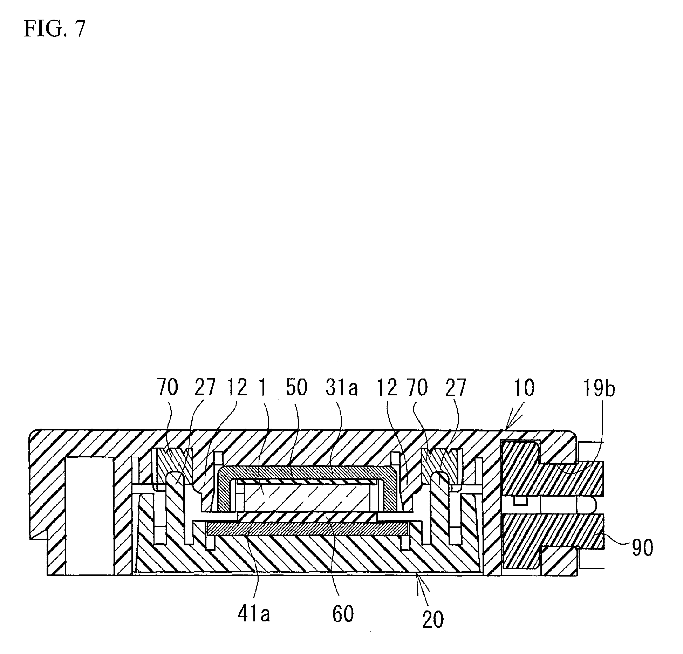

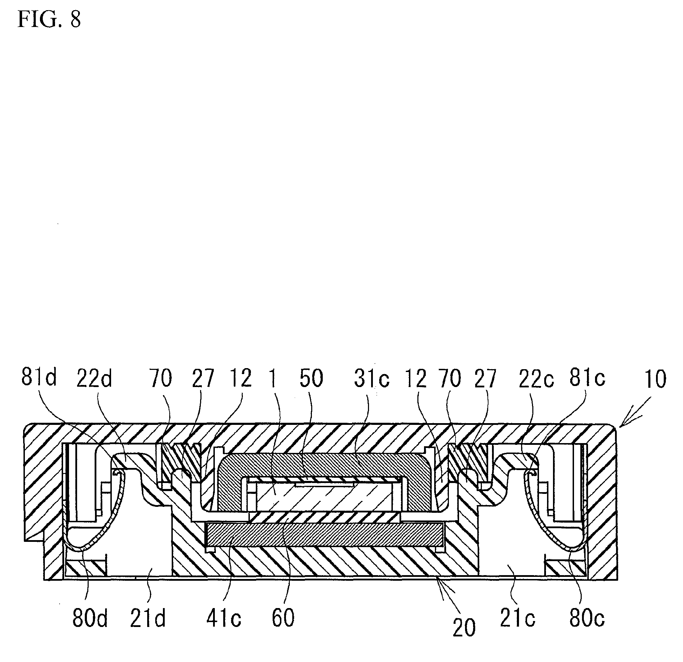

Fig. 5 is a cross-sectional view taken along A-A line of Fig. 4. Fig. 6 is a cross-sectional view taken along B-B line of Fig. 4. Fig. 7 is a cross-sectional view taken along C-C line of Fig. 4. Fig. 8 is a cross-sectional view taken along D-D line of Fig. 4.

As illustrated in Figs. 5 to 8, the glass element 1 is held to be sandwiched between the upper cushioning member 50 and the lower cushioning member 60. This prevents the damage of the glass element 1 and improves the impact resistance. The upper cushioning member 50 and the lower cushioning member 60 also serve to correct a clearance, in order to prevent the rattling of the glass element 1 in the dosimeter housing and the damage thereof.

Further, the upper metallic filter 30 holds the glass element 1 via the upper cushioning member 50, and the lower metallic filter 40 holds the glass element 1 via the lower cushioning member 60. Thus, when an external impact is applied to the dosimeter housing, the vibrations of the upper metallic filter 30 and the lower metallic filter 40 are absorbed by the upper cushioning member 50 and the lower cushioning member 60. Therefore, the degradation of the impact resistance caused by employing the upper metallic filter 30 and the lower metallic filter 40 can be prevented.

As illustrated in Figs. 6 and 8, the engagement portions 22a to 22d respectively cause the elastic bodies 80a to 80d to be elastically deformed as the upper case 10 and the lower case 20 come closer to each other, that is, come close to each other to be attached. Next, the engagement ends 81a to 81d of the elastic bodies 80a to 80d go beyond the engagement portions 22a to 22d and the engagement ends 81a to 81d return to the inner side of the lower case 20, that is, to the glass element 1 side. This respectively engages the engagement ends 81a to 81d with the engagement portions 22a to 22d. The engagement portions 22a to 22d have functions to elastically engage the upper case 10 with the lower case 20. That is, the engagement portions 22a to 22d are elastically and respectively engaged to the upper case 10 by the engagement ends 81a to 81d of the elastic bodies 80a to 80d. Therefore, the upper case 10 and the lower case 20 are kept in a closed state. That is to say, the upper case 10 and the lower case 20 are attached in the closed state by the elastic bodies 80a to 80d. Therefore, the upper case 10 and the lower case 20 are prevented from being opened by an impact or the like.

On the other hand, the wall portion 27 pushes the waterproof member 70, as illustrated in Figs. 6 to 8. The waterproof member 70 urges the upper case 10 and the lower case 20 in the direction in which the upper case 10 and the lower case 20 are opened, because the waterproof member 70 has an elasticity. In particular, the waterproof member 70 urges the upper case 10 and the lower case 20 so that the closed state of the upper case 10 and the lower case 20 is maintained by the elastic bodies 80a to 80d.

Next, a description will be given of a housing portion 19a for housing the IC tag 92.

Conventionally, in view of the impact resistance, it is preferable that the glass dosimeter capable of replacing the glass element have a thick case.

On the other hand, such a glass dosimeter can be equipped with an IC tag for storing user's personal information or the like.

For example, in Japanese Unexamined Patent Application Publication Nos. 2005-121453 and 2006-125958, systems in which the glass dosimeter equipped with the IC tag are used to manage workers.

However, in the case where such a glass dosimeter is equipped with the IC tag, when the information stored in the IC tag is read and rewritten by a reader/writer, the reader/writer is apart from the IC tag due to the thickness of the case of the glass dosimeter. This may not read and rewrite the information.

Hence, in the dosimeter housing according to an embodiment of the preset invention, the thickness of the housing portion 19a which houses the IC tag 92 is thinner than the thickness of the other portions, as illustrated in Fig. 5. With such a configuration, the reader and writer can come close to the IC tag 92 sufficiently, ensuring reading and writing. This improves the reading accuracy and the writing accuracy of the information stored in the IC tag 92 in the state in which the IC tag 92 is housed in the dosimeter housing.

Next, a description will be given of opening of the upper case 10 and the lower case 20.

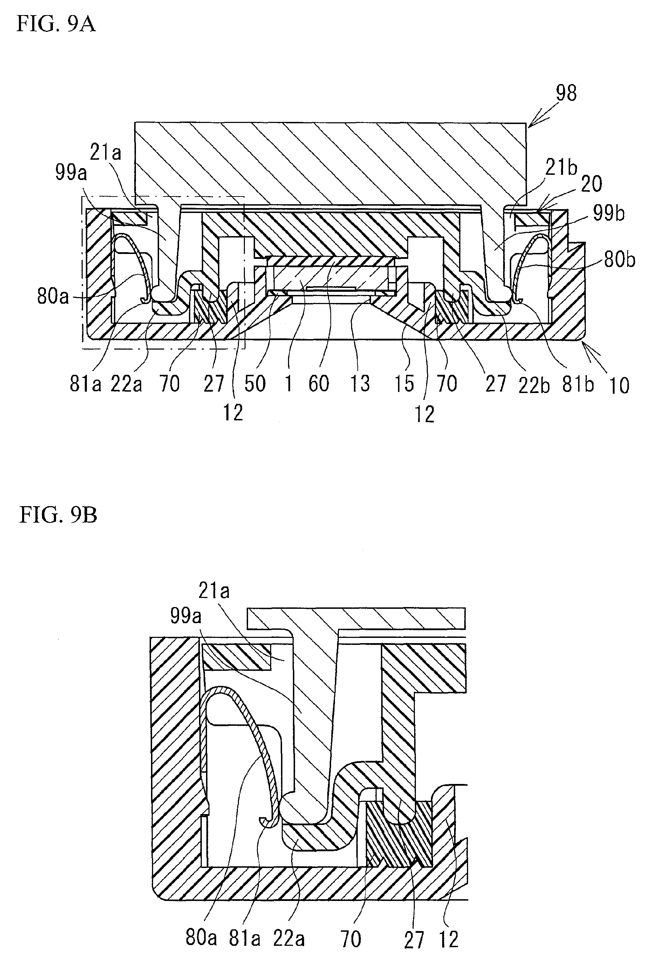

Figs. 9A and 9B are explanatory views of the opening of the upper case 10 and the lower case 20.

An opening jig 98 is needed for opening the upper case 10 and the lower case 20. The opening jig 98 has a plate shape. The opening jig 98 has leg portions 99a to 99d provided to stand, in the same direction, at its corner portions. However, the leg portions 99c and 99d are not illustrated in Fig. 9.

First, in order to open the upper case 10 and the lower case 20, the upper case 10 is placed on a stage or the like such that the lower case 20 faces upwardly. Next, the leg portions 99a to 99d are respectively inserted into the jig insertion openings 21a to 21d.

The inserted leg portions 99a to 99d respectively push the elastic bodies 80a to 80d toward the outside of the upper case 10. This releases the engagement of the elastic bodies 80a to 80d with the engagement portions 22a to 22d. That is, the attached state, in which the upper case 10 and the lower case 20 are closed by the elastic bodies 80a to 80d serving as the opening prevention means, is released by the insertion of the leg portions 99a to 99d of the opening jig 98 into the jig insertion openings 21a to 21d of the lower case 20. Fig. 9B is an enlarged view when the engaged state is released.

As mentioned heretofore, since the engagement of the elastic bodies 80a to 80d are released, the upper case 10 and the lower case 20 can be opened, so the glass element 1 can be removed.

In addition, the positions of the elastic bodies 80a to 80d respectively correspond to the positions of the jig insertion openings 21a to 21d, when the upper case 10 and the lower case 20 are attached. The elastic bodies 80a to 80d are respectively arranged at different portions. In this manner, a plurality of the elastic bodies 80a to 80d and the jig insertion openings 21a to 21d are corresponded to each other, so that the opening of the upper case 10 and the lower case 20 caused by an impact can be prevented. Moreover, the upper case 10 and the lower case 20 can be opened with ease by the insertion of the opening jig 98.

Further, the jig insertion openings 21a to 21d are provided at one surface of the lower case 20, thereby facilitating the opening workability of the upper case 10 and the lower case 20.

Further, the waterproof member 70 urges the wall portion 27 to be apart from the upper case 10, so that the waterproof member 70 functions to aid in the opening of the upper case 10 and the lower case 20.

Therefore, the replacement workability of the glass element 1 is improved.

In the state in which the upper case 10 and the lower case 20 are attached, the waterproof member 70 surrounds the glass element 1, and the jig insertion openings 21a to 21d are arranged the outside of the waterproof member 70, as illustrated in Figs. 6 and 8. With such a configuration, even if water is infiltrated via the jig insertion openings 21a to 21d, the water can be prevented from reaching the glass element 1.

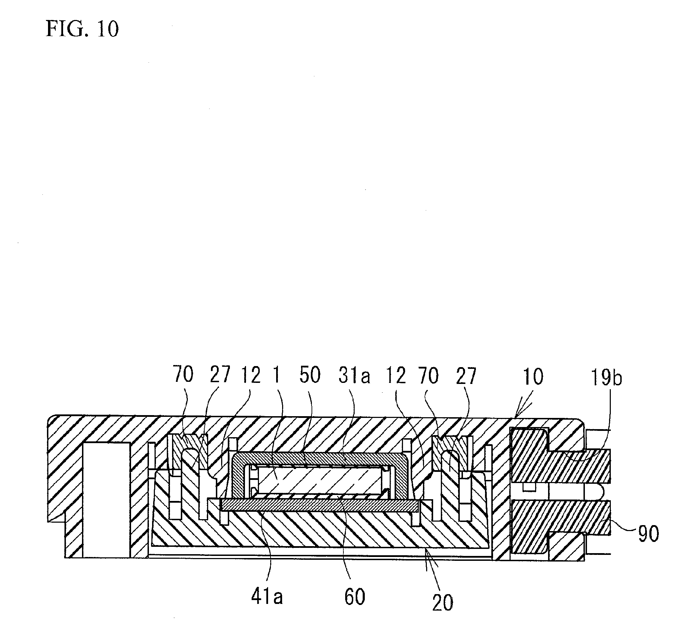

Next, a description will be given of a state in which the upper case 10 and the lower case 20 are pushed in such a direction as to be crushed by the impact or the like. Fig. 10 is an explanatory view of the state in which the upper case 10 and the lower case 20 are pushed in such a direction as to be crushed by the impact or the like. Further, Fig. 10 corresponds to Fig. 7.

When the upper case 10 and the lower case 20 are pushed in such a direction as to be crushed, bent portions (restriction portion) of the upper metallic filter 30 and the lower metallic filter 40 come into contact with each other. Therefore, the upper case 10 and the lower case 20 are not further pushed to be crushed from the state shown in Fig. 10.

Further, in the state as illustrated in Fig. 10, the upper cushioning member 50 is crushed between the upper metallic filter 30 and the glass element 1, and the lower cushioning member 60 is crushed between the lower metallic filter 40 and the glass element 1. The bent portion, which bends from both ends of the upper metallic filter 30, has a defined length such that the glass element 1 is not broken even in such a state.

In this manner, the upper metallic filter 30 and the lower metallic filter 40 are restricted from coming closer to each other. Consequently, even when the upper metallic filter 30 and the lower metallic filter 40 are pushed toward each other by the external impact or the like, the glass element 1 can be prevented from being broken by pushing the upper metallic filter 30 and the lower metallic filter 40 to the glass element 1. This improves the impact resistance.

Additionally, means which restricts the upper metallic filter 30 and the lower metallic filter 40 from coming closer to each other is provided in the upper metallic filter 30. Therefore, the increased number of the parts is prevented.

Further, the sides of the upper metallic filter 30 are bent toward the lower metallic filter 40 so as to cover the glass element 1. This results in the separation accuracy of the radiation to be maintained. Thus, the drawback caused by separating two metallic filters can be overcome.

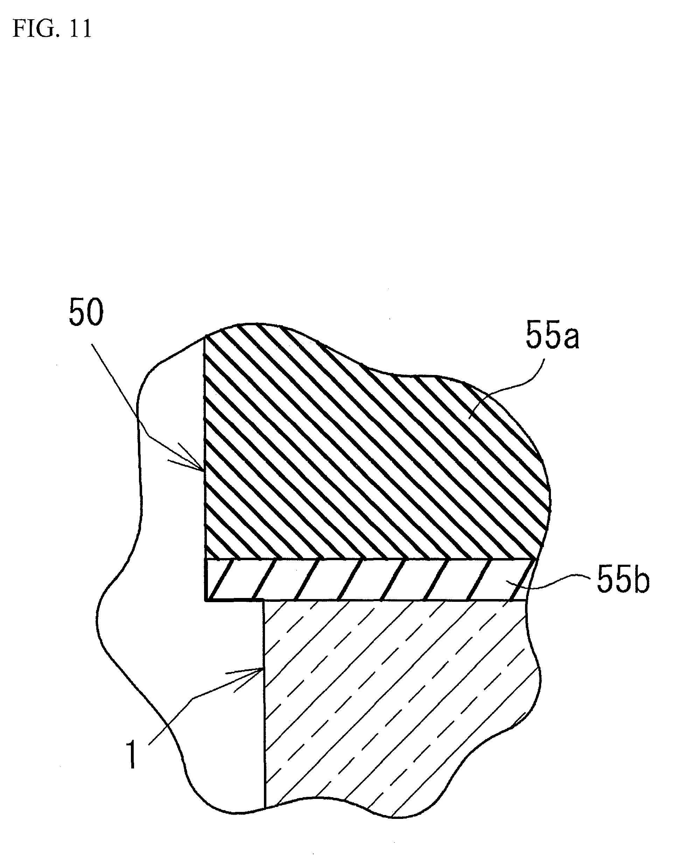

Next, a description will be given of the upper cushioning member 50 and the lower cushioning member 60. Fig. 11 is an enlarged view of the contact state of the glass element 1 and the upper cushioning member 50.

The upper cushioning member 50 is composed of a microcell polymer layer 55a and a PET film layer 55b. The PET film layer 55b is arranged to be in contact with the glass element 1.

The microcell polymer layer 55a has shock-absorbing characteristics. The PET film layer 55b has a limited shock-absorbing characteristics, but functions as an adhesion prevention portion for preventing the adhesion of the upper cushioning member 50 to the glass element 1. Likewise, the lower cushioning member 60 has the same configuration mentioned above. Hence, when the upper case 10 and the lower case 20 are opened, the adhesion of the upper cushioning member 50 or the lower cushioning member 60 to the glass element 1 can be prevented. Accordingly, the replacement workability of the glass element 1 can be improved. In addition, the PET film layer 55b is at least provided in such a position where the upper cushioning member 50 or the lower cushioning member 60 overlaps the glass element 1. The upper cushioning member 50 and the lower cushioning member 60 are respectively fixed to the upper case 10 and the lower case 20 by the double-faced adhesive tapes.

### (Second Embodiment)

Next, a description will be given of a dosimeter housing according to a second embodiment of the present invention. Additionally, similar reference numerals are used to denote similar components of the dosimeter housing according to the first embodiment of the present invention, and the description of the similar components is omitted.

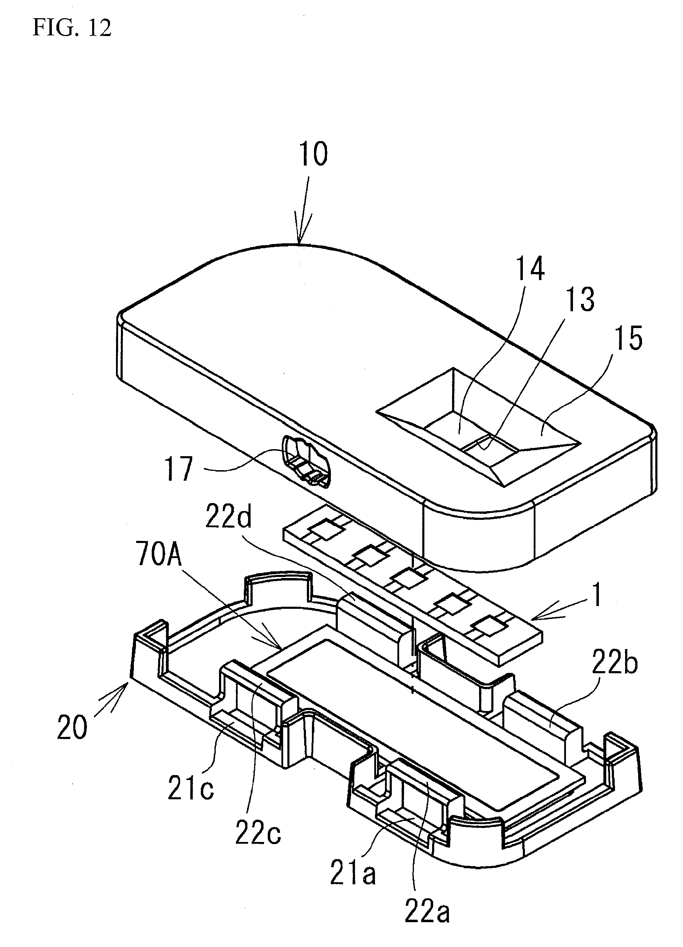

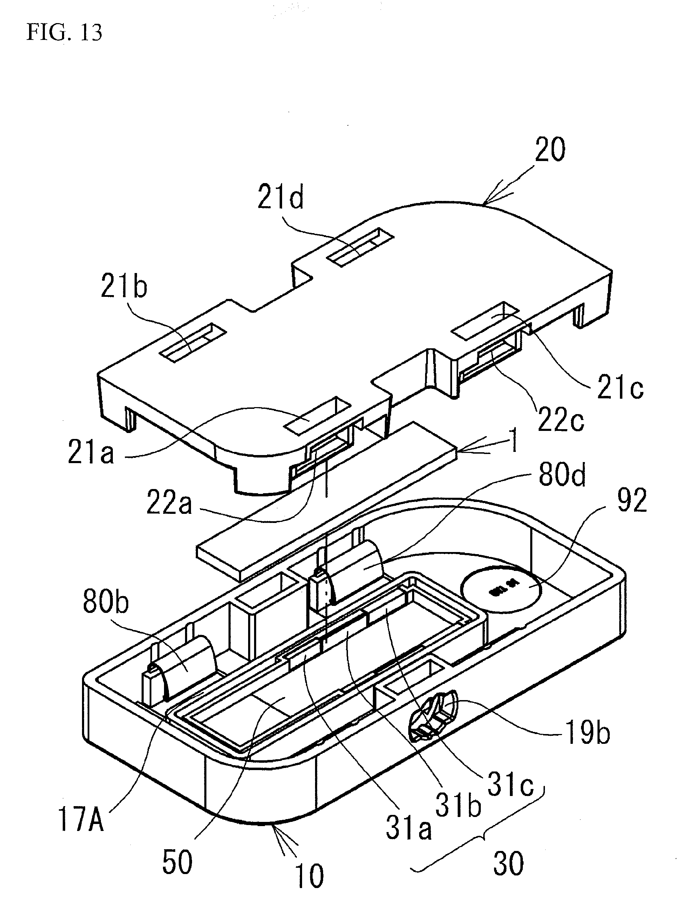

Figs. 12 and 13 are exploded perspective views of the dosimeter housing according to the second embodiment of the present invention.

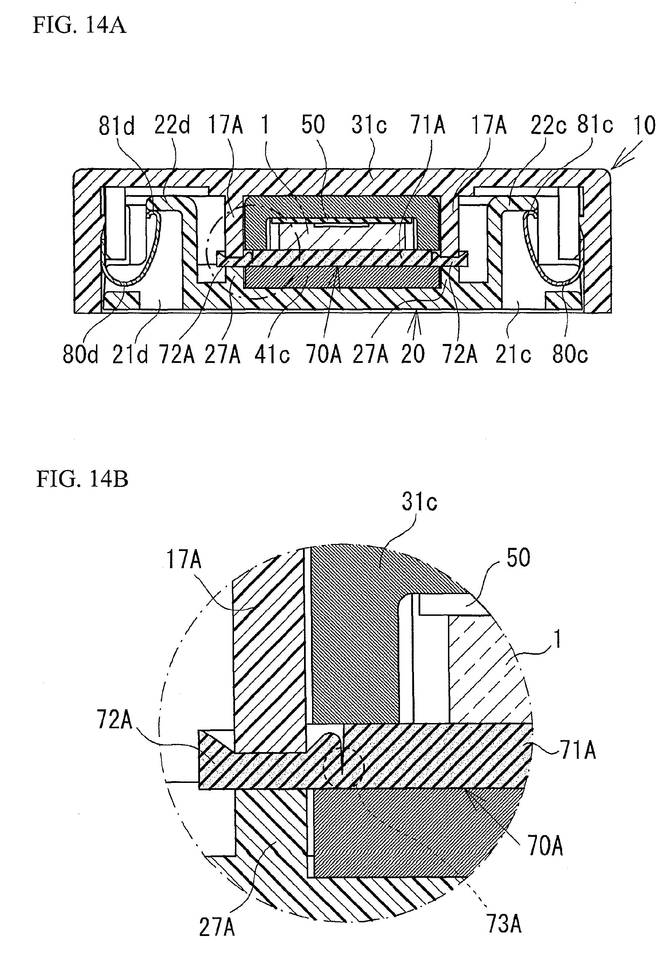

Figs. 14A and 14B are cross-sectional views of the dosimeter housing according to the second embodiment of the present invention.

A waterproof member 70A has a sheet shape as illustrated in Fig. 12, and is arranged to contact with the glass element 1. As illustrated in Figs. 14A and 14B, the waterproof member 70A has a cushioning portion 71A, which absorbs the shock applied to the glass element 1, and a sandwiched portion 72A. The sandwiched portion 72A is sandwiched between a wall portion 17A of the upper case 10 and a wall portion 27A of the lower case 20 so as to be crushed.

Also, the cushioning portion 71A and the sandwiched portion 72A are separated from each other with respect to a notch portion 73A. The notch portion 73A is provided along the edge of the waterproof member 70A and surrounds the center portion thereof. Therefore, the cushioning portion 71A is provided at the center portion of the waterproof member 70A, and the sandwiched portion 72A is provided at the edge side of the waterproof member 70A to surround the cushioning portion 71A.

In this manner, the cushioning portion 71A and the sandwiched portion 72A are separated with respect to the notch portion 73A. Accordingly, even if the sandwiched portion 72A is crushed, the cushioning portion 71A is not crushed, so that the impact applied to the glass element 1 can be absorbed. Additionally, the sandwiched portion 72A is sandwiched between the wall portion 17A and the wall portion 27A, so that the displacement of the waterproof member 70A can be prevented.

Further, the sandwiched portion 72A is provided at the edge side with respect to the cushioning portion 71A, thereby preventing the water from being infiltrated to the cushioning portion 71A. This improves the water resistance.

Furthermore, the waterproof member 70A has the cushioning portion 71A and also serves as a cushioning member, thereby decreasing the number of the parts. This reduces the manufacturing cost of the dosimeter housing.

While the preferred embodiment of the present invention have been illustrated in detail, the present invention is not limited to the above-mentioned embodiment, and other embodiments, variations and modifications may be made without departing from the scope of the present invention.

In the embodiments of the present invention, the upper case 10 is provided with the open prevention means. However, the present invention is not limited to this configuration, the lower case 20 may be provided with the open prevention means.

Further, the lower case 20 is provided with the jig insertion opening for the jig. However, the present invention is not limited to this configuration, the upper case 10 may be provided with the jig insertion opening.

In the embodiments of the present invention, there has been described the dosimeter housing in which the upper case 10 and the lower case 20 are fixed to be a closed state by using four elastic bodies 80a to 80d. However, at least two of the elastic members may be provided to sandwich the glass element 1 so as to oppose to each other via the glass element 1.

In the embodiments of the present invention, there has been described the configuration where the element for measuring radiation dose is the glass element. However, a plastic component capable of measuring radiation dose may be employed.

In the embodiments of the present invention, there has been described the arrangement in which the metallic filter is provided in the case member. However, a plastic filter or a filter using a plastic material with deposited metal may be provided. In addition, the combination of the metallic filter and a plastic filter or a filter using a plastic material with deposited metal may be provided.

In the embodiments of the present invention, there has been described the arrangement in which the filter provided in the case member has the function of separating the radiation qualities. However, a filter which has a function of separating radiation dose may be provided.

## Claims

1. A dosimeter housing **characterized by** comprising:
a case member housing a glass element for measuring a radiation dose; and
a filter provided in the case member,
wherein the filter includes two filters arranged to sandwich the glass element, and at least one of the two filters is provided with a restriction portion for restricting the two filters from coming closer to each other.

2. The dosimeter housing according to claim 1, **characterized in that** the restriction portion is provided in one of the two filters, is bent toward the other filter to cover the glass element, and is a portion coming into contact with the other filter when the two filters come closer to each other.

3. The dosimeter housing according to claim 1, **characterized in that** a cushioning member is arranged between the filter and the glass element.

4. The dosimeter housing according to any one of claims 1 to 3, **characterized in that** the filter is a metallic filter.
